# FASCICULE DE BREVET EUROPEEN

(11) **EP 3 213 004 B1**
(45) Date de publication et mention de la délivrance du brevet: **04.09.2024**
(21) Numéro de dépôt: 15805569.9
(22) Date de dépôt: 02.11.2015
(51) Int. Cl.: F24F 12/00, F24F 13/02, F24F 3/044, F24F 11/00

(54) **HUB DE DISTRIBUTION MODULÉE D'AIR NEUF**
NABE FÜR MODULIERTE VERTEILUNG VON FRISCHLUFT
HUB FOR THE MODULATED DISTRIBUTION OF FRESH AIR

(30) Priorité: 31.10.2014 FR 1460488
(43) Date de publication de la demande: 06.09.2017
(73) Titulaire: Aereco, 77615 Marne la Vallée Cedex 03 (FR)
(72) Inventeur: KRAUS, Pierre, 77340 Pontault-Combault (FR)
(74) Mandataire: Germain Maureau
(86) Numéro de dépôt international: PCT/FR2015/052942
(87) Numéro de publication internationale: WO 2016/066979

(56) Documents cités:
- EP-A1- 2 557 368
- WO-A2-2007/110505
- FR-A1- 2 839 143
- GB-A- 2 449 498
- US-A1- 2014 124 165

## Description

La présente invention se rapporte à un équipement pour dispositifs de ventilation mécanique, notamment les dispositifs de ventilation double flux.

Avec l'étanchéité croissante des logements, la ventilation mécanique est de plus en plus nécessaire pour assurer des débits de renouvellement d'air hygiénique suffisants.

Dans le contexte d'efficacité énergétique du début du XXlème siècle la ventilation double flux avec échangeur de chaleur est une technologie de plus en plus répandue.

La ventilation double flux avec échangeur est connue pour les logements individuels depuis les années 70' : un ventilateur extrait l'air dans les pièces de service (cuisine, salle de bain et toilettes), un autre insuffle l'air neuf dans les pièces principales (salon, salle à manger, chambres).

Les deux flux se croisent dans un élément particulier nommé échangeur de chaleur, dans lequel l'air extrait (plus chaud) échange ses calories avec l'air neuf (plus froid).

Cette disposition permet de récupérer une grande partie de l'énergie nécessaire au chauffage de l'air et donc de baisser considérablement le besoin en énergie du logement.

Depuis quelques années la ventilation double flux est aussi associée à certaines formes de modulation de l'air, des capteurs placés dans différentes pièces mesurent le besoin en ventilation et des dispositifs particuliers permettent d'adapter la quantité d'air ventilée aux besoins réels du logement.

Ces technologies permettent de réduire la consommation électrique des ventilateurs et de prolonger la durée de vie des filtres.

On trouve couramment des ventilations double flux dont le débit d'extraction est modulé par des capteurs dans les pièces de service. Le débit d'insufflation est alors calé sur celui d'extraction pour conserver un équilibre des deux flux, cette caractéristique est importante pour le rendement de l'échangeur de chaleur.

L'inconvénient de ce type de modulation est que le besoin en insufflation peut ne pas être satisfait par le débit exigé pour l'extraction, et que la répartition fixe des débits ne permet pas de favoriser les pièces à plus fort besoin en insufflation.

On trouve aussi, moins couramment, des ventilations double flux dont le débit d'insufflation est modulé par des capteurs dans les pièces principales. C'est alors le débit d'extraction qui est calé sur celui d'insufflation.

Là encore on retrouve le défaut précédent, inversé, à savoir que les besoins à l'extraction peuvent ne pas être satisfaits par les débits d'insufflation, et que la répartition fixe des débits ne permet pas de favoriser les pièces à plus fort besoin en extraction.

D'autres dispositifs de ventilation double flux existent aussi, qui sont plus complexes, et qui modulent à la fois les débits d'extraction et d'insufflation à partir de capteurs placés dans toutes les pièces et reliés à un pilotage centralisé. Différentes stratégies d'équilibrage sont alors utilisées selon des méthodes propres à chaque fabricant de ventilations double flux.

On connaît également, du document GB 2 449 498, un équipement pour un dispositif de ventilation double flux.La présente invention a pour but de remédier notamment aux inconvénients précités.

Ainsi, la présente invention concerne un équipement pour un dispositif de ventilation double flux selon la revendication 1.

Dans toute la demande, on définit l'expression « en amont » comme désignant tout point venant avant le point considéré dans le sens d'écoulement de tout flux d'air et l'expression « en aval » comme désignant tout point venant après le point considéré dans le sens d'écoulement du flux d'air.

Dans toute la demande, l'expression flux d'extraction doit être entendue comme tout flux d'air en amont de l'échangeur de chaleur et l'expression flux d'insufflation doit être entendue comme tout flux d'air en aval de l'échangeur de chaleur.

Un tel équipement permet de compléter le dispositif de ventilation double flux de manière à l'asservir totalement, aussi bien pour gérer des flux d'extraction, que pour gérer des flux d'insufflation, d'une manière simple, fiable, peu coûteuse, et pratique dans la mesure où il peut être installé sur n'importe quel dispositif de ventilation double flux, même si un tel dispositif de ventilation double flux est déjà installé.

Des caractéristiques techniques optionnelles de l'invention sont définies dans les revendications dépendantes 2-6.

La présente invention concerne également un procédé de mise en oeuvre d'un équipement selon l'invention, telle que définit dans la revendication indépendante 7 et les revendications dépendantes 8-12.

D'autres caractéristiques buts et avantages de la présente invention apparaîtront à la lecture de la description détaillée qui va suivre, selon les modes de réalisation donnés à titre d'exemples non limitatifs et en référence à l'unique dessin annexé sur lequel :

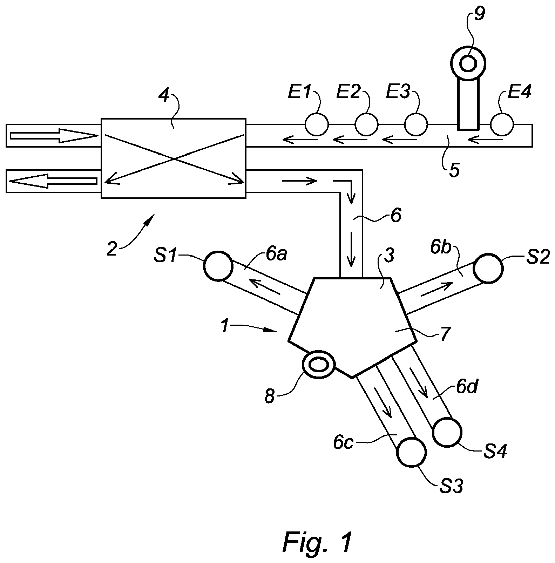

- la figure 1 représente un schéma d'un dispositif de ventilation double flux équipé d'un équipement selon un mode de réalisation de la présente invention.

En référence à la figure 1 on décrit un équipement 1 pour un dispositif de ventilation 2 double flux.

Le dispositif de ventilation 2 est modulé sur l'extraction d'air, c'est-à-dire qu'il comprend des bouches d'extraction dont par exemple le diamètre est variable en fonction des besoins en extraction définis par des besoins d'insufflation. La modulation de l'extraction d'air se fait au moyen de vannes d'extraction du dispositif de ventilation 2, ou encore de clapets ou de valves.

Le dispositif de ventilation 2 est un dispositif de ventilation 2 double flux d'une enceinte comprenant deux groupes de quatre pièces chacun, l'un premier et l'autre second. L'enceinte peut comprendre d'autres pièces n'appartenant pas à ces deux groupes qui ne seraient alors pas concernées par la ventilation double flux.

Chacune des pièces du second groupe reçoit une bouche d'extraction E1, E2, E3, E4 du dispositif de ventilation 2 pour former un flux d'extraction, dont la section est variable en fonction des besoins en extraction.

Chacune des pièces du premier groupe reçoit une bouche d'insufflation S1, S2, S3, S4 du dispositif de ventilation 2 par laquelle peut se déverser, au moyen d'un ventilateur d'insufflation du dispositif de ventilation 2, au moins une partie du flux d'insufflation.

L'équipement 1 comprend quatre capteurs de détermination de besoins d'insufflation du premier groupe. Un capteur étant disposé dans chaque pièce du premier groupe. Ces capteurs peuvent notamment être des capteurs de présence, de dioxyde de carbone, d'humidité. Il est bien entendu que chaque pièce peut comprendre plusieurs capteurs permettant une détermination plus fine des besoins d'insufflation. Le type de capteur est choisi en fonction de l'effet recherché, par exemple, quand l'on souhaite asservir un flux d'insufflation en fonction de l'humidité, un capteur d'humidité sera choisi.

L'équipement 1 comprend aussi un hub 3 de gestion d'un flux d'insufflation intégré au dispositif de ventilation 2 double flux de manière à recevoir le flux d'insufflation. Plus précisément, le hub 3 est intégré dans le dispositif de ventilation 2 de manière à pouvoir gérer la distribution du flux d'insufflation lui venant d'un échangeur de chaleur 4 du dispositif de ventilation 2 pour chacune des pièces du premier groupe.

Le hub 3 comprend quatre vannes de gestion du flux d'insufflation pilotable asservie aux besoins d'insufflation du premier groupe déterminés par les capteurs de détermination de besoins d'insufflation.

Les quatre vannes permettent d'ouvrir ou de fermer, totalement ou partiellement, de manière discrète ou continue, l'accès du flux d'insufflation à chacune des pièces du premier groupe.

Le hub 3 comprend aussi un capteur de la pression dans le hub 3.

Le flux d'extraction est amené par un ventilateur du dispositif de ventilation 2 vers l'échangeur 4.

En fonctionnement général de l'équipement 1 et du dispositif de ventilation 2, de l'air chaud des pièces du second groupe entre par les bouches d'extraction à diamètre variable grâce au ventilateur dans une tuyère d'extraction 5 donnant sur l'échangeur de chaleur 4, formant ainsi le flux d'extraction chaud. Le flux d'extraction chaud circule jusqu'à l'échangeur de chaleur 4.

En parallèle, de l'air neuf froid provenant de l'extérieur de l'enceinte est prélevé pour être amené par une tuyère d'insufflation 6 jusqu'à l'échangeur de chaleur 4, formant ainsi un flux d'insufflation froid.

S'opère alors un transfert de chaleur entre le flux d'extraction chaud et le flux d'insufflation froid au sein de l'échangeur de chaleur 4, le flux d'insufflation ressort alors de l'échangeur de chaleur 4 réchauffé, formant ainsi un flux d'insufflation chaud.

Le flux d'insufflation chaud circule alors dans la tuyère d'insufflation 6 jusqu'à un noeud de distribution 7 dont émanent en aval une pluralité de tuyères d'insufflation (6a, 6b, 6c, 6d). En amont de chacune des tuyères d'insufflation (6a, 6b, 6c, 6d) sont installées les vannes de gestion du flux d'insufflation du hub 3.

Lorsqu'elles sont ouvertes, ces vannes laissent passer le flux d'insufflation qui s'engouffre alors dans les tuyères (6a, 6b, 6c, 6d) donnant sur les pièces du premier groupe.

Le flux d'insufflation se déverse alors dans les pièces du premier groupe.

Dans un mode de fonctionnement du dispositif de ventilation 2, la pression à l'entrée du dispositif de ventilation 2, c'est-à-dire au niveau de la tuyère d'extraction 5, est maintenue constante alors que des vannes, ou tout autre dispositif par exemple des clapets ou des valves, d'extraction permettent de moduler le flux d'extraction. Lorsqu'une vanne d'extraction s'ouvre pour s'adapter au besoin d'une pièce du premier groupe, la pression dans la tuyère d'extraction 5 chute et le dispositif de ventilation 2 accélère alors le ventilateur d'extraction pour ajuster la pression de la tuyère d'extraction 5 sur la pression cible recherchée. Parallèlement à cet ajustement, le dispositif de ventilation 2 accélère alors aussi le ventilateur d'insufflation pour rétablir l'équilibre entre le flux d'extraction et le flux d'insufflation. Le débit ainsi augmenté est réparti proportionnellement à l'ouverture non variable des vannes d'insufflation du dispositif de ventilation 2. Le hub 3 permet alors de maîtriser, par réglages des vannes de gestion du flux d'insufflation du hub 3 en fonction des besoins d'insufflation du premier groupe, la pression à l'insufflation, c'est-à-dire la pression dans les différentes tuyères d'insufflation 6, 6a, 6b, 6c et 6d.

Dans l'exemple représenté sur la figure 1, le hub 3 comprend une vanne de compensation à l'insufflation 8 intégrée au dispositif de ventilation 2 double flux, ainsi qu'une vanne de compensation à l'extraction 9, elle-même aussi intégrée au dispositif de ventilation 2 double flux.

La vanne de compensation à l'extraction 9 permet le cas échéant de rétablir l'équilibre entre le flux d'extraction et le flux d'insufflation à partir des besoins d'insufflation. En l'absence de vanne de compensation à l'extraction 9, la section des bouches d'extraction E1, E2, E3, E4 peut être modulée afin de rétablir cet équilibre.

La vanne de compensation à l'insufflation 8 permet le cas échéant de maintenir une pression cible dans les tuyères d'insufflation 6, 6a, 6b, 6c et 6d, quelle que soit le flux d'extraction généré dans la tuyère d'extraction 5.

En général une seule vanne de compensation 8 ou 9 à la fois est active. Il se peut toutefois que les deux vannes de compensation 8 et 9 soient actives simultanément dans des cas exceptionnels, par exemple en cas de surventilation, c'est-à-dire lorsque l'intensité du flux d'insufflation est très important.

Les besoins d'insufflation dans les pièces du premier groupe sont lus par les capteurs de détermination de besoins d'insufflation installés dans les pièces du premier groupe.

Les besoins d'extraction sont asservis aux pressions dans les tuyères 5, 6, 6a, 6b, 6c et 6d.

Un mode particulier de fonctionnement de l'équipement 1 en conjonction avec le dispositif de ventilation 2 consisterait à ce que l'équipement 1 n'intervienne pas dans la modulation du flux d'extraction mais à seulement dimensionner le flux d'extraction en fonction des besoins d'insufflation, la vanne de compensation à l'extraction 9 ne serait alors plus nécessaire au fonctionnement de l'ensemble formé par l'équipement 1 et le dispositif de ventilation 2. Ce sont les besoins d'extraction qui pilotent le dispositif de ventilation 2 sur lequel est greffé l'équipement 1. Le flux d'insufflation, identique au flux d'extraction, est réparti dans chaque pièce en fonction du besoin, le complément éventuel passe par la vanne de compensation d'insufflation 8 qui peut être placée n'importe où.

Un autre mode particulier de fonctionnement de l'équipement 1 en conjonction avec le dispositif de ventilation 2 consisterait à ce que l'équipement 1 ne comprenne pas de vanne de compensation à l'insufflation 8. Dans ce cas de figure, le hub 3 n'aurait plus alors pour fonction que de répartir au mieux le flux d'insufflation en jouant sur les réglages des vannes de gestion du flux d'insufflation du hub 3, que le flux d'insufflation soit suffisant ou non pour satisfaire aux besoins d'insufflation. Ce sont les plus grands besoins, d'extraction ou d'insufflation, qui pilotent le dispositif de ventilation 2 sur lequel est greffé l'équipement 1. Le flux d'insufflation est distribué dans chaque pièce du premier groupe en fonction des besoins d'insufflation réels, ils peuvent être supérieurs aux besoins d'insufflation réels puisque la pression en insufflation n'est pas limitée. D'autre part, la vanne de compensation à l'insufflation 8 peut éventuellement être remplacée, au moins en partie, par une gestion particulière des vannes de gestion du flux d'insufflation du hub 3. Dans ce cas de figure, le réglage des vannes de gestion du flux d'insufflation du hub 3 dépend non seulement des besoins d'insufflation dans les pièces du premier groupe, mais aussi des besoins d'extraction s'ils sont supérieurs aux besoins d'insufflation. Les vannes de gestion du flux d'insufflation du hub 3 sont alors plus ouvertes que si leur réglage ne dépendait que des besoins d'insufflation.

Un autre mode particulier de fonctionnement de l'équipement 1 en conjonction avec le dispositif de ventilation 2 consisterait à ce que l'équipement 1 ne comprenne pas de vannes de compensation à l'insufflation 8 et à l'extraction 9. Dans ce cas de figure, ce sont les besoins en extraction qui pilotent le dispositif de ventilation 2 sur lequel est greffé l'équipement 1. Le flux d'insufflation, identique au flux d'extraction, est réparti dans chaque pièce en fonction du besoin, la pression en insufflation n'est ni garantie ni limitée. Une gestion des vannes de gestion du flux d'insufflation du hub 3 avec prise en compte de la pression pourrait partiellement jouer le rôle de vanne de compensation à l'insufflation 8 et limiter la pression.

Lorsque l'on a un pilotage complet du dispositif de ventilation 2 sur lequel est greffé l'équipement 1, c'est-à-dire lorsque l'on a actives les vannes de compensation à l'extraction 9 et à l'insufflation 8, ce sont les besoins, d'extraction ou d'insufflation, les plus grands qui pilotent le dispositif de ventilation 2 sur lequel est greffé l'équipement 1. Le flux d'insufflation est distribué dans chaque pièce du premier groupe en fonction des besoins d'insufflation réels, le complément éventuel passe par la vanne de compensation à l'insufflation 8 ou à l'extraction 9 selon les cas ; ces vannes de compensation peuvent être placées n'importe où. La pression à l'insufflation est maîtrisée.

Dans la suite, sont décrits plus en détail des modes de fonctionnement de l'équipement 1 en conjonction avec le dispositif de ventilation 2.

Dans chacun des modes de fonctionnement qui vont être décrits, on choisit de partir d'une situation dans laquelle les flux d'extraction Q_{E} et d'insufflation Q_{S} sont équilibrés et la pression cible dans la tuyère d'extraction 5 est P_{E} et la pression cible dans la tuyère d'insufflation 6 est P_{S}.

Dans le premier mode de fonctionnement détaillé, les vannes de compensation à l'extraction 9 et à l'insufflation 8 sont fermées, ou n'existent pas, c'est-à-dire que leurs ouvertures respectives VdCₑ et VdCₛ sont nulles.

Lorsque les besoins d'extraction augmentent, alors les vannes d'extraction du dispositif de ventilation 2 accroissent leur ouverture, ce qui induit une baisse de la pression P_{E}. Le ventilateur d'extraction réagit alors pour rétablir la pression cible P_{E}, il en résulte alors une intensification du flux d'extraction Q_{E}. Le ventilateur d'insufflation du dispositif de ventilation 2 réagit alors pour équilibrer le flux d'insufflation Q_{S}. Il en résulte une hausse de la pression P_{S}. Le capteur de pression dans le hub 3 va détecter cette hausse de pression P_{S} et agir sur la vanne de compensation d'insufflation 8 pour l'ouvrir, c'est-à-dire que VdC_{S} augmente. Il en résulte une baisse de la pression P_{S}. Le capteur de pression dans le hub 3 va détecter cette baisse de pression P_{S} et agir si nécessaire sur la vanne de compensation à l'insufflation 8 jusqu'à atteindre la pression P_{S} cible. Selon l'amplitude de la variation et les algorithmes de réactions retenus, notamment pour le pilotage de la vanne de compensation d'insufflation 8 plus ou moins sophistiqué, avec ou sans pré-calcul du résultat, hystérésis sur la pression, il peut y avoir quelques aller-retour de ce type avant que le système ne s'équilibre. Finalement, les deux flux d'extraction et d'insufflation sont à nouveaux équilibrés avec de nouvelles valeurs correspondant aux nouveaux besoins, P_{E} et P_{S} sont aux valeurs nominales.

Lorsque les besoins d'extraction diminuent, alors les vannes d'extraction du dispositif de ventilation 2 diminuent leur ouverture, ce qui induit une hausse de la pression P_{E}. Le ventilateur d'extraction réagit alors pour rétablir la pression cible P_{E}, il en résulte alors une réduction du flux d'extraction Q_{E}. Le ventilateur d'insufflation du dispositif de ventilation 2 réagit alors pour équilibrer le flux d'insufflation Qₛ. Il en résulte une baisse de la pression P_{S}. Le capteur de pression dans le hub 3 va détecter cette baisse de pression P_{S} et agir sur la vanne de compensation d'extraction 9 pour l'ouvrir, c'est-à-dire que VdC_{E} augmente. Il en résulte une baisse de la pression P_{E}. Le ventilateur d'extraction du dispositif de ventilation 2 réagit alors pour rétablir la pression P_{E}. Il en résulte une augmentation du flux d'extraction Q_{E}. Le ventilateur d'insufflation réagit alors pour équilibrer le flux d'insufflation Qₛ. Il en résulte une hausse de la pression P_{E}. Le capteur de pression dans le hub 3 va détecter cette hausse de pression P_{E} et agir si nécessaire sur la vanne de compensation à l'extraction 9 jusqu'à atteindre la pression P_{S} cible. Selon l'amplitude de la variation et les algorithmes de réactions retenus, notamment pour le pilotage de la vanne de compensation d'extraction 9 plus ou moins sophistiqué, avec ou sans pré-calcul du résultat, hystérésis sur la pression, il peut y avoir quelques aller-retour de ce type avant que le système ne s'équilibre. Finalement, les deux flux d'extraction et d'insufflation sont à nouveaux équilibrés avec des valeurs correspondant aux anciens besoins, puisque les besoins d'insufflation n'ont pas changés alors que ceux d'extraction diminuaient et en considérant que l'insufflation commande. P_{E} et P_{S} sont aux valeurs nominales.

Lorsque la demande en insufflation augmente, alors les vannes d'insufflation de l'équipement 1 accroissent leur ouverture, ce qui induit une baisse de la pression P_{S}. Le capteur de pression dans le hub 3 va détecter cette baisse de pression P_{S} et agir sur la vanne de compensation d'extraction 9 pour l'ouvrir, c'est-à-dire que VdC_{E} augmente. Il en résulte une baisse de la pression P_{E}. Le ventilateur d'extraction réagit alors pour rétablir la pression P_{E}. Il en résulte une augmentation du flux d'extraction Q_{E}. Le ventilateur d'insufflation réagit alors pour équilibrer le flux d'insufflation Q_{S}. Il en résulte une hausse de P_{S}. Là encore il peut y avoir quelques aller-retour avant un nouvel équilibre. Finalement, les deux flux sont à nouveaux équilibrés avec de nouvelles valeurs correspondant aux nouveaux besoins, P_{E} et P_{S} sont aux valeurs cible.

Lorsque la demande en insufflation diminue, cela induit une hausse de la pression P_{S}. Le capteur de pression dans le hub 3 va détecter cette hausse de pression P_{S} et agir sur la vanne de compensation d'insufflation 8 pour l'ouvrir, c'est-à-dire que VdC_{S} augmente. Il en résulte une baisse de la pression P_{S}. Finalement, les deux flux sont à nouveaux équilibrés avec les mêmes valeurs initiales correspondant aux anciens besoins, P_{E} et P_{S} sont aux valeurs cible.

Dans le second mode de fonctionnement détaillé, la vanne de compensation à l'insufflation 8 est fermée, ou n'existe pas, c'est-à-dire que son ouverture VdC_{S} est nulle, et la vanne de compensation à l'extraction 9 est ouverte, c'est-à-dire que son ouverture VdC_{E} n'est pas nulle.

Lorsque les besoins d'extraction augmentent, alors les vannes d'extraction du dispositif de ventilation 2 accroissent leur ouverture, ce qui induit une baisse de la pression P_{E}. Le ventilateur d'extraction réagit alors pour rétablir la pression cible P_{E}, il en résulte alors une intensification du flux d'extraction Q_{E}. Le ventilateur d'insufflation du dispositif de ventilation 2 réagit alors pour équilibrer le flux d'insufflation Q_{S}. Il en résulte une hausse de la pression P_{S}. Le capteur de pression dans le hub 3 va détecter cette hausse de pression P_{S} et agir sur la vanne de compensation d'extraction 9 pour la fermer. Il en résulte une hausse de P_{E}. Le ventilateur d'extraction réagit alors pour rétablir la pression P_{E}. Il en résulte une baisse du flux d'extraction Q_{E}. Le ventilateur d'insufflation réagit alors pour équilibrer le flux d'insufflation Q_{S}. Il en résulte une baisse de la pression P_{S}. Selon le résultat et les algorithmes de réactions retenus, notamment pour le pilotage de la vanne de compensation plus ou moins sophistiqué, avec ou sans pré-calcul du résultat, hystérésis sur la pression, il peut y avoir quelques aller-retour de ce type avant que le système ne s'équilibre. Il se peut aussi que la fermeture de la vanne de compensation à l'extraction 9 ne suffise pas à équilibrer les pressions, le hub 3 va alors agir sur la vanne de compensation d'insufflation pour l'ouvrir, Il en résulte une baisse de la pression P_{S}. Le capteur de pression dans le hub 3 va détecter cette baisse de pression et agir ou non sur la vanne de compensation à l'insufflation jusqu'à atteindre la pression P_{S} nominale. Selon l'amplitude de la variation et les algorithmes de réactions retenus (pilotage de la vanne de compensation plus ou moins sophistiqué, avec ou sans pré-calcul du résultat, hystérésis sur la pression,...) il peut y avoir quelques aller-retour de ce type avant que le système ne s'équilibre. Finalement les deux flux sont à nouveaux équilibrés avec de nouvelles valeurs correspondant au nouveau besoin supérieur, si la vanne de compensation d'extraction 9 s'est ouverte, ou égal à leur valeur d'origine si la vanne de compensation d'extraction 9 est restée fermée, selon le déséquilibre initial et l'amplitude de la variation. P_{E} et P_{S} sont aux valeurs cible.

Lorsque les besoins d'extraction diminuent, alors les vannes d'extraction du dispositif de ventilation 2 diminuent leur ouverture, ce qui induit une hausse de la pression P_{E}. Le ventilateur d'extraction réagit alors pour rétablir la pression cible P_{E}, il en résulte alors une réduction du flux d'extraction Q_{E}. Le ventilateur d'insufflation du dispositif de ventilation 2 réagit alors pour équilibrer le flux d'insufflation Q_{S}. Il en résulte une baisse de la pression P_{S}. Le capteur de pression dans le hub 3 va détecter cette baisse de pression P_{S} et agir sur la vanne de compensation d'extraction 9 qui est ouverte, pour l'ouvrir encore plus. Il en résulte une hausse de Q_{E}. Le ventilateur d'insufflation du dispositif de ventilation 2 réagit alors pour équilibrer Q_{E} et Q_{S}. Il en résulte une baisse de la pression P_{S}. Selon le résultat et les algorithmes de réactions retenus, notamment pour le pilotage de la vanne de compensation plus ou moins sophistiqué, avec ou sans pré-calcul du résultat, hystérésis sur la pression, il peut y avoir quelques aller-retour de ce type avant que le système ne s'équilibre. Finalement, les deux flux d'extraction et d'insufflation sont à nouveaux équilibrés avec des valeurs correspondant aux anciens besoins, puisque les besoins d'insufflation n'ont pas changés alors que ceux d'extraction diminuaient et en considérant que l'insufflation commande. P_{E} et P_{S} sont aux valeurs nominales.

Lorsque la demande en insufflation augmente, cela induit une baisse de la pression P_{S}. Le capteur de pression dans le hub 3 va détecter cette baisse de pression P_{S} et agir sur la vanne de compensation d'extraction 9 pour l'ouvrir plus grand, c'est-à-dire que VdC_{E} augmente. Il en résulte une baisse de la pression P_{E}. Le ventilateur d'extraction réagit alors pour rétablir la pression Pₑ. Il en résulte une augmentation du flux d'extraction Q_{E}. Le ventilateur d'insufflation réagit alors pour équilibrer le flux d'insufflation Q_{E}. Il en résulte une hausse de P_{S}. Là encore il peut y avoir quelques aller-retour avant un nouvel équilibre. Finalement, les deux flux sont à nouveaux équilibrés avec de nouvelles valeurs correspondant aux nouveaux besoins, P_{E} et P_{S} sont aux valeurs cible.

Lorsque la demande en insufflation diminue, cela induit une hausse de la pression P_{S}. Le capteur de pression dans le hub 3 va détecter cette hausse de pression P_{S} et agir sur la vanne de compensation d'extraction 9 pour la refermer. Le ventilateur d'extraction réagit alors pour rétablir la pression P_{E}. Il en résulte une baisse du flux d'extraction Q_{E}. Le ventilateur d'insufflation réagit alors pour équilibrer le flux d'insufflation Q_{S}. Il en résulte une baisse de la pression P_{S}. Selon le résultat et suivant les algorithmes de réactions retenus (pilotage de la vanne de compensation plus ou moins sophistiqué, avec ou sans pré-calcul du résultat, ...) il peut y avoir quelques aller-retour de ce type avant que le système ne s'équilibre. Il se peut aussi que la fermeture de la vanne de compensation à l'extraction 9 ne suffise pas à équilibrer les pressions, le hub 3 va alors agir sur la vanne de compensation d'insufflation pour l'ouvrir, il en résulte une baisse de la pression P_{S}. Le capteur de pression dans le hub 3 va détecter cette baisse de pression et agir ou non sur la vanne de compensation à l'insufflation jusqu'à atteindre la pression P_{S} cible. Selon l'amplitude de la variation et les algorithmes de réactions retenus (pilotage de la vanne de compensation plus ou moins sophistiqué, avec ou sans pré-calcul du résultat, hystérésis sur la pression,...) il peut y avoir quelques aller-retour de ce type avant que le système ne s'équilibre. Finalement les deux flux sont à nouveaux équilibrés avec de nouvelles valeurs correspondant au nouveau besoin. P_{E} et P_{S} sont aux valeurs cible.

Dans le troisième mode de fonctionnement détaillé, la vanne de compensation à l'insufflation 8 est ouverte, c'est-à-dire que son ouverture VdC_{S} n'est pas nulle, et la vanne de compensation à l'extraction 9 est fermée, ou n'existe pas, c'est-à-dire que son ouverture VdC_{E} est nulle.

Lorsque les besoins d'extraction augmentent, alors les vannes d'extraction du dispositif de ventilation 2 accroissent leur ouverture, ce qui induit une baisse de la pression P_{E}. Le ventilateur d'extraction réagit alors pour rétablir la pression cible P_{E}, il en résulte alors une intensification du flux d'extraction Q_{E}. Le ventilateur d'insufflation du dispositif de ventilation 2 réagit alors pour équilibrer le flux d'insufflation Q_{S}. Il en résulte une hausse de la pression P_{S}. Le capteur de pression dans le hub 3 va détecter cette hausse de pression P_{S} et agir sur la vanne de compensation d'insufflation pour l'ouvrir plus grand. Il en résulte une baisse de P_{S}. Selon le résultat et les algorithmes de réactions retenus, notamment pour le pilotage de la vanne de compensation plus ou moins sophistiqué, avec ou sans pré-calcul du résultat, hystérésis sur la pression, il peut y avoir quelques aller-retour de ce type avant que le système ne s'équilibre. Finalement les deux flux sont à nouveaux équilibrés avec de nouvelles valeurs correspondant au nouveau besoin. P_{E} et P_{S} sont aux valeurs cible.

Lorsque les besoins d'extraction diminuent, cela induit une hausse de la pression P_{E}. Le ventilateur d'extraction réagit alors pour rétablir la pression cible P_{E}, il en résulte alors une réduction du flux d'extraction Q_{E}. Le ventilateur d'insufflation du dispositif de ventilation 2 réagit alors pour équilibrer le flux d'insufflation Q_{S}. Il en résulte une baisse de la pression P_{S}. Le capteur de pression dans le hub 3 va détecter cette baisse de pression P_{S} et agir sur la vanne de compensation d'insufflation 9 qui est ouverte, pour la refermer. Il en résulte une hausse de P_{S}. Selon le résultat et les algorithmes de réactions retenus, notamment pour le pilotage de la vanne de compensation plus ou moins sophistiqué, avec ou sans pré-calcul du résultat, hystérésis sur la pression, il peut y avoir quelques aller-retour de ce type avant que le système ne s'équilibre. Il se peut aussi que la fermeture de la vanne de compensation à l'insufflation 8 ne suffise pas à équilibrer les pressions, le hub 3 va alors agir sur la vanne de compensation d'extraction 9 pour l'ouvrir. Il en résulte une baisse de la pression P_{E}. Le ventilateur d'extraction réagit alors pour rétablir la pression P_{E}. Il en résulte une hausse du flux d'extraction Q_{E}. Le ventilateur d'insufflation réagit alors pour équilibrer le flux d'insufflation Q_{S}. Il en résulte une hausse de la pression P_{S}. Le capteur de pression dans le hub 3 va détecter cette hausse de pression et agir ou non sur la vanne de compensation à l'extraction jusqu'à atteindre la pression P_{S} cible. Selon l'amplitude de la variation et les algorithmes de réactions retenus (pilotage de la vanne de compensation plus ou moins sophistiqué, avec ou sans pré-calcul du résultat, hystérésis sur la pression,...) il peut y avoir quelques aller-retour de ce type avant que le système ne s'équilibre. Finalement les deux flux sont à nouveaux équilibrés avec de nouvelles valeurs correspondant au nouveau besoin. P_{E} et P_{S} sont aux valeurs cible.

Lorsque les besoins d'insufflation augmentent, il en résulte une baisse de la pression P_{S}. Le capteur de pression dans le hub 3 va détecter cette baisse de pression P_{S} et agir sur la vanne de compensation d'insufflation 9 qui est ouverte, pour la refermer. Il en résulte une hausse de P_{S}. Selon le résultat et les algorithmes de réactions retenus, notamment pour le pilotage de la vanne de compensation plus ou moins sophistiqué, avec ou sans pré-calcul du résultat, hystérésis sur la pression, il peut y avoir quelques aller-retour de ce type avant que le système ne s'équilibre. Il se peut aussi que la fermeture de la vanne de compensation à l'insufflation 8 ne suffise pas à équilibrer les pressions, le hub 3 va alors agir sur la vanne de compensation d'extraction 9 pour l'ouvrir. Il en résulte une baisse de la pression P_{E}. Le ventilateur d'extraction réagit alors pour rétablir la pression P_{E}. Il en résulte une hausse du flux d'extraction Q_{E}. Le ventilateur d'insufflation réagit alors pour équilibrer le flux d'insufflation Q_{S}. Il en résulte une hausse de la pression P_{S}. Le capteur de pression dans le hub 3 va détecter cette hausse de pression et agir ou non sur la vanne de compensation à l'extraction jusqu'à atteindre la pression P_{S} cible. Selon l'amplitude de la variation et les algorithmes de réactions retenus (pilotage de la vanne de compensation plus ou moins sophistiqué, avec ou sans pré-calcul du résultat, hystérésis sur la pression,...) il peut y avoir quelques aller-retour de ce type avant que le système ne s'équilibre. Finalement les deux flux sont à nouveaux équilibrés avec de nouvelles valeurs correspondant au nouveau besoin supérieur, si la vanne de compensation d'extraction 9 s'est ouverte, ou égal à leur valeur d'origine si la vanne de compensation d'extraction 9 est restée fermée, selon le déséquilibre initial et l'amplitude de la variation. P_{E} et P_{S} sont aux valeurs cible.

Lorsque la demande en insufflation diminue, cela induit une hausse de la pression Pₛ. Le capteur de pression dans le hub 3 va détecter cette hausse de pression Pₛ et agir sur la vanne de compensation d'insufflation 8 pour l'ouvrir plus grand. Il en résulte une baisse de P_{S}. Selon le résultat et les algorithmes de réactions retenus, notamment pour le pilotage de la vanne de compensation plus ou moins sophistiqué, avec ou sans pré-calcul du résultat, hystérésis sur la pression, il peut y avoir quelques aller-retour de ce type avant que le système ne s'équilibre. Finalement, les deux flux d'extraction et d'insufflation sont à nouveaux équilibrés avec des valeurs correspondant aux anciens besoins, les besoins d'extraction n'ont pas changé. P_{E} et P_{S} sont aux valeurs nominales.

Les passages en surventilation restent possibles, l'augmentation du flux d'extraction par augmentation de la pression P_{E} entraînera une augmentation de P_{S} et une réaction du système pour réduire les ouvertures mais la compensation du ventilateur ira au-delà des possibilités de réaction du hub 3 ; une liaison directe (filaire ou autre) peut aussi simplifier ce mode de fonctionnement en évitant des inconvénients acoustiques (trop forte hausse de P_{S}).

Des informations peuvent aussi être remontées depuis l'équipement 1 au dispositif de pilotage du dispositif de ventilation 2 double flux initial par exemple sur le fonctionnement des vannes de gestion du flux d'insufflation de l'équipement 1, les flux d'insufflation par pièce ou les niveaux de qualité d'air par pièce mais ces liaisons (dans un sens ou dans l'autre) ne sont pas nécessaires au fonctionnement de l'invention.

De la même manière des informations peuvent aussi être remontées depuis le dispositif de ventilation 2 à l'équipement 1.

## Revendications

1. Équipement (1) pour un dispositif de ventilation (2) double flux, le dispositif de ventilation étant modulé sur l'extraction, et/ou sur l'insufflation, d'air, d'une enceinte comprenant deux groupes d'au moins une pièce l'un premier et l'autre second, le premier groupe comprenant au moins une bouche d'insufflation (S1, S2, S3, S4) et le second groupe comprenant au moins une bouche d'extraction (E1, E2, E3, E4), l'équipement (1) comprenant :
- au moins un capteur de détermination de besoins d'insufflation du premier groupe,
- un hub (3) de gestion d'un flux d'insufflation dans le premier groupe, et/ou un hub de gestion d'un flux d'extraction à partir du second groupe, le hub (3) de gestion du flux d'insufflation et/ou le hub de gestion du flux d'extraction comprenant au moins un moyen de gestion du flux, le moyen de gestion du flux étant pilotable asservie aux besoins d'insufflation du premier groupe, , le hub (3) étant configuré pour être intégré au dispositif de ventilation double flux de manière à recevoir le flux d'insufflation, et/ou le flux d'extraction,
l'équipement (1) étant **caractérisé en ce que** le hub (3) de gestion du flux comprend au moins un capteur de la pression dans le hub (3), l'équipement (1) comprenant au moins une vanne de compensation à l'insufflation (8).

2. Équipement (1) selon la revendication 1 **caractérisé en ce que** le premier groupe présente plusieurs pièces, l'équipement comprend alors plusieurs capteurs de détermination de besoins en insufflation chacun installé dans une pièce du premier groupe.

3. Équipement (1) selon la revendication 1 ou 2 **caractérisé en ce que** le second groupe présente plusieurs pièces.

4. Équipement (1) selon l'une quelconque des revendications précédentes **caractérisé en ce qu'**il comprend au moins une vanne de compensation à l'extraction (9).

5. Équipement (1) selon l'une quelconque des revendications précédentes **caractérisé en ce que** lorsqu'il est intégré en aval de l'échangeur de chaleur (4), le hub comprend plusieurs vannes de gestion chacune gérant le flux d'insufflation pour chaque pièce du premier groupe.

6. Équipement (1) selon l'une quelconque des revendications 1 à 4 **caractérisé en ce que** lorsqu'il est intégré en amont de l'échangeur de chaleur (4), le hub (3) comprend plusieurs vannes de gestion chacune gérant le flux d'extraction pour chaque pièce du second groupe.

7. Procédé de mise en oeuvre d'un équipement (1) selon l'une quelconque des revendications précédentes, **caractérisé en ce que** lorsque le hub (3) est intégré en aval de l'échangeur de chaleur (4), le procédé comprend une étape de pilotage par le hub (3) de l'ouverture de chaque vanne de gestion du flux d'insufflation en fonction d'informations collectées par les capteurs de détermination de besoins d'insufflation pour adapter au mieux le flux d'insufflation aux besoins d'insufflation.

8. Procédé selon la revendication 7 **caractérisé en ce qu'**il comprend une étape de pilotage par le hub (3) de l'ouverture de chaque vanne de gestion du flux d'insufflation en fonction de la pression mesurée dans le hub (3) ou dans des tuyères d'insufflation (6, 6a, 6b, 6c, 6d) pour adapter au mieux le flux d'insufflation aux besoins d'insufflation.

9. Procédé selon la revendication 7 à 8 **caractérisé en ce qu'**il comprend une étape de pilotage par le hub (3) de la vanne de compensation à l'extraction (9) pour modifier le flux d'extraction et l'adapter au flux d'insufflation.

10. Procédé selon l'une quelconque des revendications 7 à 9 **caractérisé en ce qu'**il comprend une étape de pilotage par le hub (9) de la vanne de compensation à l'insufflation (8) pour maintenir une pression cible dans le hub (3) ou dans des tuyères d'insufflation (6, 6a, 6b, 6c, 6d).

11. Procédé selon l'une quelconque des revendications 7 à 10 **caractérisé en ce qu'**il comprend une étape de réception et de traitement par le hub (3) d'informations complémentaires émanant du dispositif de ventilation (2) double flux.

12. Procédé selon l'une quelconque des revendications 7 à 11 **caractérisé en ce qu'**il comprend une étape de traitement et de transmission par le hub (3) d' informations complémentaires au dispositif de ventilation (2) double flux.

## Patentansprüche

1. Ausrüstung (1) für eine Doppelstrom-Belüftungsvorrichtung (2), wobei die Belüftungsvorrichtung auf das Absaugen und/oder das Einblasen von Luft aus einem/in ein Gebäude moduliert ist, das zwei Gruppen von mindestens einem Raum, einem ersten und einem zweiten, umfasst, wobei die erste Gruppe mindestens eine Einblasmündung (S1, S2, S3, S4) umfasst und die zweite Gruppe mindestens eine Absaugmündung (E1, E2, E3, E4) umfasst, wobei die Ausrüstung (1) Folgendes umfasst:
- mindestens einen Sensor zum Bestimmen der Einblasanforderungen der ersten Gruppe,
- einen Verwaltungsknoten (3) für einen Einblasstrom in der ersten Gruppe und/oder einen Verwaltungsknoten für einen Absaugstrom aus der zweiten Gruppe, wobei der Verwaltungsknoten (3) für den Einblasstrom in der ersten Gruppe und/oder der Verwaltungsknoten für den Absaugstrom aus der zweiten Gruppe eine Stromverwaltungseinrichtung umfassen, wobei die Stromverwaltungseinrichtung abhängig von den Einblasanforderungen der Gruppe steuerbar ist, wobei der Knoten (3) dazu konfiguriert ist, derart in die Doppelstrom-Belüftungsvorrichtung integriert zu werden, dass sie den Einblasstrom und/oder den Absaugstrom empfängt,
wobei die Ausrüstung (1) **dadurch gekennzeichnet ist, dass** der Stromverwaltungsknoten (3) mindestens einen Drucksensor im Knoten (3) umfasst, wobei die Ausrüstung (1) mindestens ein Ausgleichsventil (8) für das Einblasen umfasst.

2. Ausrüstung (1) nach Anspruch 1, **dadurch gekennzeichnet, dass** die erste Gruppe mehrere Räume aufweist, wobei die Ausrüstung daher mehrere Sensoren zum Bestimmen der Einblasanforderungen umfasst, die jeweils in einem Raum der ersten Gruppe installiert sind.

3. Ausrüstung (1) nach Anspruch 1 oder 2, **dadurch gekennzeichnet, dass** die zweite Gruppe mehrere Räume aufweist.

4. Ausrüstung (1) nach einem der vorhergehenden Ansprüche, **dadurch gekennzeichnet, dass** sie mindestens ein Ausgleichsventil (9) für das Absaugen umfasst.

5. Ausrüstung (1) nach einem der vorhergehenden Ansprüche, **dadurch gekennzeichnet, dass** der Knoten, wenn er dem Wärmetauscher (4) nachgelagert eingebaut ist, mehrere Verwaltungsventile umfasst, die jeweils den Einblasstrom für jeden Raum der ersten Gruppe verwalten.

6. Ausrüstung (1) nach einem der Ansprüche 1 bis 4, **dadurch gekennzeichnet, dass** der Knoten (3), wenn er dem Wärmetauscher (4) vorgelagert eingebaut ist, mehrere Verwaltungsventile umfasst, die jeweils den Absaugstrom für jeden Raum der ersten Gruppe verwalten.

7. Verfahren zum Implementieren einer Ausrüstung (1) nach einem der vorhergehenden Ansprüche, **dadurch gekennzeichnet, dass** das Verfahren, wenn der Knoten (3) dem Wärmetauscher (4) nachgelagert eingebaut ist, einen Schritt des Steuerns der Öffnung jedes Verwaltungsventils für den Einblasstrom durch den Knoten (3) in Abhängigkeit von Informationen, die durch die Sensoren zum Bestimmen der Einblasanforderungen erfasst werden, umfasst, um den Einblasstrom optimal an die Einblasanforderungen anzupassen.

8. Verfahren nach Anspruch 7, **dadurch gekennzeichnet, dass** es einen Schritt des Steuerns der Öffnung jedes Verwaltungsventils für den Einblasstrom durch den Knoten (3) in Abhängigkeit von dem in dem Knoten (3) oder in den Einblasdüsen (6, 6a, 6b, 6c, 6d) gemessenen Druck umfasst, um den Einblasstrom optimal an die Einblasanforderungen anzupassen.

9. Verfahren nach Anspruch 7 oder 8, **dadurch gekennzeichnet, dass** es einen Schritt des Steuerns des Ausgleichsventils (9) für das Absaugen durch den Knoten (3) umfasst, um den Absaugstrom zu modifizieren und ihn an den Einblasstrom anzupassen.

10. Verfahren nach einem der Ansprüche 7 bis 9, **dadurch gekennzeichnet, dass** es einen Schritt des Steuerns des Ausgleichsventils (8) für das Einblasen durch den Knoten (9) umfasst, um einen Zieldruck in dem Knoten (3) oder in den Einblasdüsen (6, 6a, 6b, 6c, 6d) aufrechtzuerhalten.

11. Verfahren nach einem der Ansprüche 7 bis 10, **dadurch gekennzeichnet, dass** es einen Schritt des Empfangens und Verarbeitens komplementärer Informationen, die von der Doppelstrom-Belüftungsvorrichtung (2) stammen, durch den Knoten (3) umfasst.

12. Verfahren nach einem der Ansprüche 7 bis 11, **dadurch gekennzeichnet, dass** es einen Schritt des Verarbeitens und Übertragens komplementärer Informationen durch den Knoten (3) an die Doppelstrom-Belüftungsvorrichtung (2) umfasst.

## Claims

1. An equipment (1) for a dual flow ventilation device (2), the ventilation device being modulated on the exhaust, and/or on the supply, of air, of an enclosure comprising two groups of at least one room one first and the other second, the first group comprising at least one air supply outlet (S1, S2, S3, S4) and the second group comprising at least one exhaust outlet (E1, E2, E3, E4), the equipment (1) comprising:
- at least one sensor for determining the supply needs of the first group,
- a hub (3) for the management of a supply flow in the first group, and/or a hub for the management of an exhaust flow from the second group, the hub (3) for the management of the supply flow and/or the hub for the management of the exhaust flow comprising at least one means for flow management, the means for flow management being controllable slave for the supply needs of the first group, the hub (3) being configured to be integrated into the dual flow ventilation device so as to receive the supply flow, and/or the exhaust flow.
the equipment (1) being **characterized in that** the hub (3) for flow management comprises at least one pressure sensor in the hub (3), the equipment (1) comprising at least one valve (8) for compensating the supply air.

2. The equipment (1) according to claim 1 **characterized in that** the first group has several rooms, the equipment then comprises several sensors for determining the supply needs each being installed in a room of the first group.

3. The equipment (1) according to claim 1 or 2 **characterized in that** the second group has several rooms.

4. The equipment (1) according to any one of the preceding claims **characterized in that** it comprises at least one valve (9) for compensating the exhaust.

5. The equipment (1) according to any one of the preceding claims **characterized in that** when it is integrated downstream of the heat exchanger (4), the hub comprises several management valves each managing the supply flow for each room of the first group.

6. The equipment (1) according to any one of claims 1 to 4 **characterized in that** when it is integrated upstream of the heat exchanger (4), the hub (3) comprises several management valves each managing the exhaust flow for each room of the second group.

7. A method for implementing an equipment (1) according to any one of the preceding claims, **characterized in that** when the hub (3) is integrated downstream of the heat exchanger (4), the method comprises a step of controlling by the hub (3) the opening of each valve for the management of the supply flow depending on information collected by the sensors for determining the supply needs to adapt at best the supply flow to the supply needs.

8. The method according to claim 7 **characterized in that** it comprises a step of controlling by the hub (3) the opening of each valve for the management of the supply flow depending on the pressure measured in the hub (3) or in the supply nozzles (6, 6a, 6b, 6c, 6d) to adapt at best the supply flow to the supply needs.

9. The method according to claim 7 to 8 **characterized in that** it comprises a step of controlling by the hub (3) the valve (9) for compensating the exhaust to modify the exhaust flow and adapt it to the supply flow.

10. The method according to any one of claim 7 to 9 **characterized in that** it comprises a step of controlling by the hub (9) the valve (8) for compensating the supply to maintain a target pressure in the hub (3) or in the supply nozzles (6, 6a, 6b, 6c, 6d)

11. The method according to any one of claims 7 to 10 **characterized in that** it comprises a step of receiving and processing by the hub (3) complementary information coming out from the dual flow ventilation device (2).

12. The method according to any one of claims 7 to 11 **characterized in that** it comprises a step of processing and transmitting by the hub (3) complementary information to the dual flow ventilation device (2).
